# EUROPEAN PATENT SPECIFICATION

(11) **EP 2 634 092 B1**
(45) Date of publication and mention of the grant of the patent: **12.02.2020**
(21) Application number: 13157154.9
(22) Date of filing: 28.02.2013
(51) Int. Cl.: B64D 13/00, B64D 13/04, B64D 13/06

(54) **Active air flow control in aircraft**
Aktive Strömungsregelung in Flugzeugen
Contrôl actif d'écoulement d'air dans un aéronef

(30) Priority: 01.03.2012 US 201213409635
(43) Date of publication of application: 04.09.2013
(73) Proprietor: Hamilton Sundstrand Corporation, Charlotte, NC 28217 (US)
(72) Inventor: Desmarais, Don, Westfield, MA Massachusetts 01085 (US); Maljanian, JR., John M., Farmington, CT Connecticut 06085 (US)
(74) Representative: Dehns

(56) References cited:
- EP-A2- 1 333 254
- DE-A1-102008 039 782
- DE-A1-102010 006 147
- DE-C1- 19 707 858

## Description

### BACKGROUND OF THE INVENTION

The present invention is directed to air flow in aircraft, and more particularly, exemplary embodiments of the present invention are directed to active air flow control in aircraft.

Conventional aircraft ventilation and air conditioning systems are disposed to control total ventilation airflow into a passenger cabin and a cockpit through modulation of an auxiliary power unit powering the air conditioning systems. However, aircraft passenger cabins may be divided into a plurality of different zones. These zones may each have a particular airflow requirement which is not easily addressed through manipulation of total ventilation airflow and modulation of the entire power unit. DE 102010006147 A1 describes an air distribution system aimed to overcome disadvantages associated with trimming. DE 10200803978 A1 describes an air conditioning system for a transportation means having multiple zones to be air conditioned.

### BRIEF DESCRIPTION OF THE INVENTION

An active airflow control system for an aircraft is described in claim 1.

A method of active airflow control in an aircraft is also described in claim 8.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a system of active airflow control for an aircraft, according to an exemplary embodiment of the present invention;
FIG. 2 is another system of active airflow control for an aircraft, according to an exemplary embodiment of the present invention; and
FIG. 3 is a method of active airflow control for an aircraft, according to an exemplary embodiment of the present invention.

### DETAILED DESCRIPTION OF THE INVENTION

Passenger cabins in aircraft may be divided into a plurality of different zones. Each zone, under steady-state and changing circumstances, may have a minimum airflow requirement. According to exemplary embodiments of the present invention, a solution is provided which realizes active control of airflow to each zone of the plurality of zones, ensuring that minimum airflow requirements of each zone are met while limiting modulation of an auxiliary power unit powering an air conditioning system. The technical effects and benefits of exemplary embodiments include an increase in auxiliary power unit life expectancy and active control of airflow within aircraft.

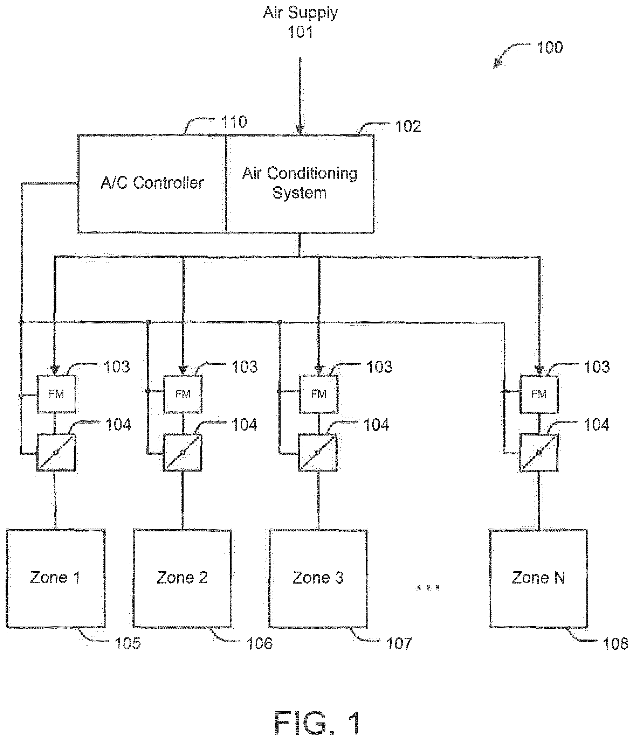

Turning to FIG. 1, a system of active airflow control for an aircraft is illustrated. The system 100 includes air supply 101. The air supply 101 may be a steady and/or compressed supply of air disposed to be dispersed within an aircraft's cockpit and passenger cabin. The system 100 further includes air conditioning system 102 in fluid communication with the air supply 101. The air conditioning system 102 may receive air from the air supply 101, condition the received air, and disperse the air to the aircraft's cockpit and passenger cabin. Furthermore, the air conditioning system 102 may include a controller portion 110 configured to control the air conditioning system 102. The controller portion 110 may include a computer processor, microprocessor, microcontroller, application-specific integrated circuit, or any other suitable controller configured to execute instructions or operations related to controlling the air conditioning system 102.

The system 100 further includes a plurality of flow measuring devices 103 (i.e., airflow feedback apparatuses) in fluid communication with the air conditioning system 102, and in signal communication with the controller portion 110. Each flow measuring device 103 may be a device configured to detect a rate or amount of air travelling therethrough, and relay the flow rate or amount of air to the controller portion 110. For example, the flow measuring devices 103 may be embodied as venturi devices or any similar devices disposed to detect a volume or flow rate of air passing proximate thereto.

The system 100 further includes a plurality of flow control devices 104 in fluid communication with the flow measuring devices 103 and the air conditioning system 102, and in signal communication with the controller portion 110. Each flow control device 104 may be a device configured to dampen or control a flow of air passing therethrough in response to a signal received from the controller portion 110. For example, the flow control devices 104 may be embodied as dampers, valves, or any similar devices disposed to control a flow of air passing therethrough.

As further illustrated, the system 100 includes a plurality of aircraft zones 105, 106, 107, and 108 in fluid communication with respective flow control devices 104 and flow measuring devices 103. Each zone of the plurality of aircraft zones 105-108 may be any pressurized area or portion of an aircraft (e.g., passenger cabin zones, flight deck compartment). Depending upon an air flow need of a particular zone, the controller portion 110 may receive a current flow of air through a flow measuring device 103 and further dampen or increase air flow to the particular zone through application of a control signal to a respective flow control device 104.

For example, if Zone 1 (105) requires a first amount of air flow, while Zones 2-N (106-108) require a second amount of air flow, the controller portion 110 may balance airflow through control of each individual flow control device 104 while receiving updated flow measurements from each individual flow measuring device 103. In this manner, the controller portion 110 can ensure that the first amount of air flow is actually provided to Zone 1 105 and the second amount of air flow is provided to all remaining zones while reducing the overall demand from the auxiliary power unit / engine powering the air conditioning system. Additionally, if the air conditioning system is operating with the engine as the air source, there will be a fuel burn benefit that would be realized.

Furthermore, the system 100 may continually rebalance airflow to each zone of the plurality of zones 105-108 depending upon control feedback provided to the controller portion 110. For example, occupant information may be updated at the controller portion 110 to represent a distribution of aircraft occupants within each zone. Thereafter, a minimum amount of air flow per occupant may be coordinated and calculated to determine minimum airflow requirements for each zone based on occupant distribution. Upon calculation of updated requirements, airflow to each aircraft zone may be balanced again to ensure all airflow requirements are met or exceeded. Accordingly, additional updates during aircraft operation are possible, for example when re-seating or re-distributing occupants, such that minimum airflow requirements are always ensured according to occupancy in each individual zone.

As described above, exemplary embodiments of the present invention provide systems for active airflow control in aircraft which are capable of determining and balancing airflow requirements across an entire pressurized section of an aircraft based on a plurality of aircraft zones. Each zone of the aircraft may include a flow measuring device and flow control device providing airflow measurements therefrom and controlling airflow thereto. Each flow measuring device and flow control device may be in signal communication with a controller portion of an air conditioning system of the aircraft, and the controller portion of the air conditioning system may interpret information provided by each flow measuring device, as well as aircraft cabin occupancy information, to determine and balance airflow to each aircraft zone while minimizing power cycling of the air conditioning system.

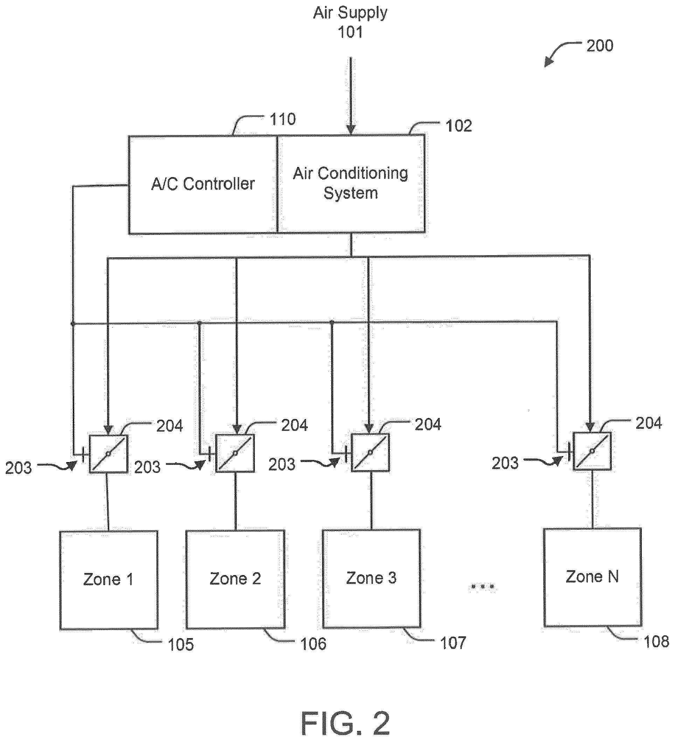

Although particularly described as separate and distinct devices, the flow measuring devices 103 and flow control devices 104 may be integrated into a singular device. Furthermore, mechanical position feedback may also be used to determine or infer airflow based on overall airflow provided from an air conditioning system. Therefore, individual flow measuring devices may be omitted if mechanical positions of flow control devices are available to a controller of an air conditioning system. For example, FIG. 2 illustrates an active airflow control system for an aircraft absent flow measuring devices.

Turning to FIG. 2, the system 200 may include the air conditioning system 102, controller portion 110, and plurality of zones 105-108. However, the system 200 includes a plurality of flow control devices 204 in fluid communication with each aircraft zone. Furthermore, each flow control device 204 includes flow control position feedback portions 203 configured to provide mechanical position information to the controller portion 110 (i.e., airflow feedback apparatuses). For example, mechanical position information may include a numerical value representing a mechanical position of the flow control device 204. The mechanical position may be a percent open, percent closed, a fixed numerical range representing a range of open or closed positions, or any other suitable mechanical position information. This mechanical position information may be provided to the controller portion 110.

Upon receipt of individual mechanical position information for each flow control device 204 controlling air flow to each individual zone of the aircraft, an amount of airflow per zone may be calculated based on a total airflow provided by the air conditioning system 102 in relation to the related positions of each flow control device. This information may be processed to determine appropriate mechanical positions for each flow control device 204 such that minimum airflow requirements are met for each individual zone. Furthermore, airflow to each zone may be balanced and rebalanced as described above, to adapt to changing occupancy information for each zone.

In this manner, the system 200 may be controlled somewhat similarly to system 100, thereby providing active control of airflow while reducing power cycling and modulation of the air conditioning system 102.

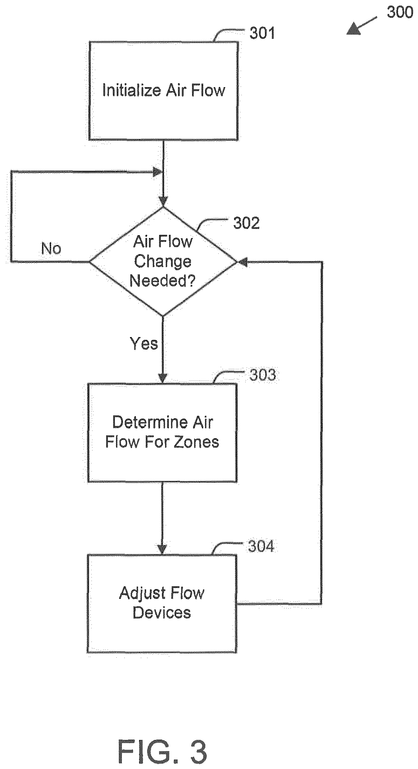

Hereinafter, a method of active airflow control for an aircraft is described with reference to FIG. 3.

FIG. 3 illustrates a flowchart of a method of active airflow control for an aircraft, according to an exemplary embodiment of the present invention. The method 300 includes initializing airflow to a pressurized portion of an aircraft at block 301. Initializing the airflow includes powering on or initializing an air conditioning system 102 such that supply air is received, conditioned, and dispersed to the pressurized portion of the aircraft. As stated above, the pressurized portion of the aircraft is divided into a plurality of different zones.

Subsequently, the method 300 includes determining if a change in airflow is needed at block 302. Determining if the change is needed may include determining if an occupant count for a particular aircraft zone has changed. Determining if the change is needed may also include determining if occupant distribution across aircraft zones has changed. Determining if the change is needed may also include determining if a minimum airflow requirement has been disrupted based on airflow being redirected to a different zone (e.g., for airflow balancing). Furthermore, determining if the change is needed may include any combination of the above examples, such that overall balancing may be established for continually changing conditions within the aircraft.

Subsequent to determining a change in airflow is not needed, the method 300 loops and continues to monitor airflow needs, changes, and shifts at block 302.

Subsequent to determining a change in airflow is actually needed, the method 300 includes determining airflow requirements for each zone of the aircraft at block 303. Determining airflow requirements may include receiving airflow information from a plurality of flow measuring devices measuring airflow to each individual zone, determining a minimum airflow for each individual zone based on occupancy information for the aircraft, and determining a change to airflow for each zone based on the received flow information and the occupancy information. For example, a minimum amount of airflow may be established for each occupant. This minimum airflow may be a predetermined value of airflow per occupant established or regulated by a regulatory body. Further, the airflow per occupant may be extrapolated across individual zones based on a number of occupants in each zone to determine the minimum airflow required for each zone. This minimum airflow for each zone may be compared to the received airflow information to determine if an increase or decrease in airflow is necessary.

Upon determining airflow requirements for each zone, the method 300 includes adjusting flow control devices to match or exceed the airflow requirements at block 304. Adjusting flow control devices may include directing particular flow control devices to increase or decrease airflow to an associated zone, for example, by opening or closing each flow control device by a specified amount required to achieve the desired or minimum airflow, or to exceed the airflow requirements.

As described above, systems and methods of active airflow control for aircraft are provided which realize active control of airflow to each zone of a plurality of aircraft zones, ensuring that minimum airflow requirements are met while limiting modulation (e.g., powering on-off) of an auxiliary power unit powering an air conditioning system.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An active airflow control system (100) for an aircraft, comprising:
an air conditioning system (102);
an air conditioning controller (110) configured to control operation of the air conditioning system;
a plurality of flow control devices (104) in fluid communication with the air conditioning system and in signal communication with the air conditioning controller (110), wherein the plurality of flow control devices (104) are configured to increase and decrease an amount of air flowing therethrough in response to receiving a controlling signal from the air conditioning controller (110); and
a plurality of zones (105) in fluid communication with the air conditioning system (102), wherein each zone of the plurality of zones is a pressurized zone of the aircraft, and wherein each zone of the plurality of zones is in fluid communication with at least one flow control device of the plurality of flow control devices (104), wherein
the air conditioning controller (110) is configured to direct each flow control device of the plurality of flow control devices to provide a minimum amount of air flow to an associated zone of the plurality of zones; and **characterized by** the air conditioning controller (110) further being configured to determine an occupant distribution of each zone at a particular time, and evaluate a change of the occupant distribution for each zone; and the air conditioning controller (110) being configured to determine the minimum amount of air flow for each associated zone based on the number of occupants in each associated zone, and further based on the change of the occupant distribution for each zone with respect to time.

2. The system of claim 1, further comprising:
a plurality of airflow feedback apparatuses in communication with the plurality of flow control devices (104) and in signal communication with the air conditioning controller (110).

3. The system of claim 2, wherein the plurality of airflow feedback apparatuses are flow measuring devices configured to measure an amount of air flowing therethrough.

4. The system of claim 3, wherein the plurality of flow measuring devices are venturi devices.

5. The system of claim 2, wherein the plurality of airflow feedback apparatuses are mechanical position feedback apparatuses configured to determine a mechanical position of an associated flow control device of the plurality of flow control devices.

6. The system of claim 1, wherein the air conditioning system (102) is in fluid communication with an air supply, the air conditioning system (102) being configured to disperse the supply of air into the plurality of zones.

7. The system of claim 1, wherein the air conditioning controller is configured to balance airflow across the plurality of zones (105) in response to occupancy information of each zone of the plurality of zones.

8. A method (300) of active airflow control in an aircraft, comprising:
initializing airflow to a plurality of zones (105) in an aircraft, wherein the initializing of the airflow includes initializing a plurality of flow control devices (104) in fluid communication with each zone of the plurality of zones;
determining if a change in airflow is required in at least one zone of the plurality of zones;
determining airflow requirements for each zone of the plurality of zones responsive to determining a change in airflow is required for the at least one zone; and
adjusting the plurality of flow control devices (104) to match or exceed the airflow requirements; and **characterized by**
determining a minimum amount of air flow for each associated zone based on a number of occupants in each associated zone; and determining an occupant distribution of each: zone at a particular time, and evaluating a change of the occupant distribution for each zone; and
directing each flow control device of the plurality of flow control devices to provide the minimum amount of air flow to an associated zone of the plurality of zones based on the number of occupants in each associated zone based on the change of the occupant distribution for each zone with respect to time.

9. The method of claim 8, wherein initializing the airflow further includes initializing an air conditioning system (102) for the aircraft, the air conditioning system being configured to provide airflow dispersal to the plurality of zones.

10. The method of claim 8, wherein adjusting the plurality of flow control devices comprises directing each flow control device of the plurality of flow control devices to increase or decrease airflow to an associated zone based on the airflow requirements.

11. The method of claim 8, wherein determining if the change in airflow is needed comprises:
determining if a minimum airflow requirement for the at least one zone has been disrupted.

12. The method of claim 11, wherein determining if a minimum airflow requirement has been disrupted includes receiving airflow information from an airflow feedback apparatus of the at least one zone.

## Patentansprüche

1. System (100) zur aktiven Strömungsregelung für ein Flugzeug, umfassend:
ein Klimatisierungssystem (102);
eine Klimatisierungsregelung (110), die dazu konfiguriert ist, den Betrieb des Klimatisierungssystems zu regeln;
eine Vielzahl von Strömungsregelungsvorrichtungen (104), die in Fluidverbindung mit dem Klimatisierungssystem und in Signalverbindung mit der Klimatisierungsregelung (110) stehen, wobei die Vielzahl von Strömungsregelungsvorrichtungen (104) dazu konfiguriert ist, in Reaktion auf ein Empfangen eines Regelungssignals von der Klimatisierungsregelung (110), eine Menge an durchströmender Luft zu erhöhen und zu verringern; und
eine Vielzahl von Zonen (105), die in Fluidverbindung mit dem Klimatisierungssystem (102) stehen, wobei jede Zone aus der Vielzahl von Zonen eine unter Druck stehende Zone des Flugzeugs ist, und wobei jede Zone aus der Vielzahl von Zonen in Fluidverbindung mit mindestens einer Strömungsregelungsvorrichtung aus der Vielzahl von Strömungsregelungsvorrichtungen (104) steht, wobei
die Klimatisierungsregelung (110) dazu konfiguriert ist, jede Strömungsregelungsvorrichtung aus der Vielzahl von Strömungsregelungsvorrichtungen anzuweisen, eine Mindestmenge an Luftströmung für eine zugeordnete Zone aus der Vielzahl von Zonen bereitzustellen; und **dadurch gekennzeichnet, dass** die Klimatisierungsregelung (110) ferner dazu konfiguriert ist, eine Belegungsverteilung für jede Zone zu einer bestimmten Zeit zu bestimmen, und eine Veränderung in der Belegungsverteilung für jede Zone zu evaluieren; und wobei die Klimatisierungsregelung (110) dazu konfiguriert ist, eine Mindestmenge an Luftströmung für jede zugeordnete Zone zu bestimmen, basierend auf der Anzahl von Belegungen in jeder zugeordneten Zone, und ferner basierend auf der Veränderung der Belegungsverteilung für jede Zone in Bezug auf die Zeit.

2. System nach Anspruch 1, ferner umfassend:
eine Vielzahl von Luftströmungsrückmeldeapparaturen, die in Verbindung mit der Vielzahl von Strömungsregelungsvorrichtungen (104) und in Signalverbindung mit der Klimatisierungsregelung (110) stehen.

3. System nach Anspruch 2, wobei die Vielzahl von Luftströmungsrückmeldeapparaturen Strömungsmessvorrichtungen sind, die dazu konfiguriert sind, eine Menge an durch sie hindurchströmender Luft zu messen.

4. System nach Anspruch 3, wobei die Vielzahl von Strömungsmessvorrichtungen Venturi-Vorrichtungen sind.

5. System nach Anspruch 2, wobei die Vielzahl von Luftströmungsrückmeldeapparaturen mechanische Positionsrückmeldeapparaturen sind, die dazu konfiguriert sind, eine mechanische Position einer zugeordneten Strömungsregelungsvorrichtung von der Vielzahl von Strömungsregelungsvorrichtungen zu bestimmen.

6. System nach Anspruch 1, wobei das Klimatisierungssystem (102) in Fluidverbindung mit einer Luftzufuhr steht, wobei das Klimatisierungssystem (102) dazu konfiguriert ist, die Luftzufuhr auf die Vielzahl von Zonen zu verteilen.

7. System nach Anspruch 1, wobei die Klimatisierungsregelung dazu konfiguriert ist, in Reaktion auf eine Belegungsinformation einer jeden Zone aus der Vielzahl von Zonen (105), den Luftstrom gleichmäßig über die Vielzahl von Zonen zu verteilen.

8. Verfahren (300) zur aktiven Strömungsregelung in einem Flugzeug, umfassend:
Initialisieren einer Luftströmung zu einer Vielzahl von Zonen (105) in einem Flugzeug, wobei das Initialisieren der Luftströmung das Initialisieren einer Vielzahl von Strömungsregelungsvorrichtungen (104) beinhaltet, die in Fluidverbindung mit jeder Zone aus der Vielzahl von Zonen stehen;
Bestimmen, ob eine Veränderung der Luftströmung in mindestens einer der Zonen aus der Vielzahl von Zonen benötigt wird;
Bestimmen der Luftströmungsanforderungen für jede Zone aus der Vielzahl von Zonen als Reaktion auf das Bestimmen, dass eine Veränderung der Luftströmung für die mindestens eine Zone benötigt wird; und
Anpassen der Vielzahl von Strömungsregelungsvorrichtungen (104), damit sie den Luftströmungsanforderungen entsprechen oder diese übertreffen; und **dadurch gekennzeichnet, dass**
eine Mindestmenge an Luftströmung für jede zugeordnete Zone bestimmt wird, basierend auf einer Anzahl von Belegungen in jeder zugeordneten Zone; und die Belegungsverteilung jeder Zone zu einer bestimmten Zeit bestimmt wird, und die Belegungsverteilung für jede Zone evaluiert wird; und
jede Strömungsregelungsvorrichtung aus der Vielzahl von Strömungsregelungsvorrichtungen angewiesen wird, die Mindestmenge an Luftströmung für eine zugeordnete Zone aus der Vielzahl von Zonen bereitzustellen, basierend auf der Anzahl von Belegungen in jeder zugeordneten Zone, die auf der Veränderung der Belegungsverteilung für jede Zone mit Bezug auf die Zeit basiert.

9. Verfahren nach Anspruch 8, wobei das Initialisieren der Luftströmung ferner das Initialisieren eines Klimatisierungssystems (102) für das Flugzeug beinhaltet, wobei das Klimatisierungssystem dazu konfiguriert ist, eine Luftströmungsverteilung an die Vielzahl von Zonen bereitzustellen.

10. Verfahren nach Anspruch 8, wobei das Anpassen der Vielzahl von Strömungsregelungsvorrichtungen umfasst, dass jede Strömungsregelungsvorrichtung aus der Vielzahl von Strömungsregelungsvorrichtungen angewiesen wird, die Luftströmung zu einer zugeordneten Zone basierend auf den Luftströmungsanforderungen entweder zu erhöhen oder zu verringern.

11. Verfahren nach Anspruch 8, wobei das Bestimmen, ob die Veränderung der Luftströmung benötigt wird, umfasst:
Bestimmen, ob eine Mindestluftströmungsanforderung für die mindestens eine Zone unterbrochen wurde.

12. Verfahren nach Anspruch 11, wobei das Bestimmen, ob eine Mindestluftströmungsanforderung unterbrochen wurde, das Empfangen von Luftströmungsinformationen von einer Luftströmungsrückmeldeapparatur der mindestens einen Zone beinhaltet.

## Revendications

1. Système de contrôle actif d'écoulement d'air (100) pour un aéronef, comprenant :
un système de climatisation (102) ;
un dispositif de commande de climatisation (110) configuré pour commander le fonctionnement du système de climatisation ;
une pluralité de dispositifs de contrôle d'écoulement (104) en communication fluidique avec le système de climatisation et en communication de signal avec le dispositif de commande de climatisation (110), dans lequel la pluralité de dispositifs de contrôle d'écoulement (104) sont configurés pour augmenter ou diminuer une quantité d'air s'écoulant à travers ceux-ci en réponse à la réception d'un signal de commande en provenance du dispositif de commande de climatisation (110) ; et
une pluralité de zones (105) en communication fluidique avec le système de climatisation (102), dans lequel chaque zone de la pluralité de zones est une zone pressurisée de l'aéronef, et dans lequel chaque zone de la pluralité de zones est en communication fluidique avec au moins un dispositif de contrôle d'écoulement de la pluralité de dispositifs de contrôle d'écoulement (104), dans lequel
le dispositif de commande de climatisation (110) est configuré pour diriger chaque dispositif de contrôle d'écoulement de la pluralité de dispositifs de contrôle d'écoulement afin de fournir une quantité minimale d'écoulement d'air à une zone associée de la pluralité de zones ; et **caractérisé par** le dispositif de commande de climatisation (110) étant en outre configuré pour déterminer une répartition des occupants de chaque zone à un moment particulier, et évaluer un changement de la répartition des occupants pour chaque zone ; et le dispositif de commande de climatisation (110) étant configuré pour déterminer la quantité minimale d'écoulement d'air pour chaque zone associée sur la base du nombre d'occupants dans chaque zone associée, et en outre sur la base du changement de la répartition des occupants pour chaque zone par rapport au temps.

2. Système selon la revendication 1, comprenant en outre :
une pluralité d'appareils de rétroaction d'écoulement d'air en communication avec la pluralité de dispositifs de contrôle d'écoulement (104) et en communication de signal avec le dispositif de commande de climatisation (110).

3. Système selon la revendication 2, dans lequel la pluralité d'appareils de rétroaction d'écoulement d'air sont des dispositifs de mesure d'écoulement configurés pour mesurer une quantité d'air s'écoulant à travers ceux-ci.

4. Système selon la revendication 3, dans lequel la pluralité de dispositifs de mesure d'écoulement sont des dispositifs venturi.

5. Système selon la revendication 2, dans lequel la pluralité d'appareils de rétroaction d'écoulement d'air sont des appareils de rétroaction de position mécanique configurés pour déterminer une position mécanique d'un dispositif de contrôle d'écoulement associé de la pluralité de dispositifs de contrôle d'écoulement.

6. Système selon la revendication 1, dans lequel le système de climatisation (102) est en communication fluidique avec une alimentation en air, le système de climatisation (102) étant configuré pour disperser l'alimentation en air dans la pluralité de zones.

7. Système selon la revendication 1, dans lequel le dispositif de commande de climatisation est configuré pour équilibrer l'écoulement d'air à travers la pluralité de zones (105) en réponse à des informations d'occupation de chaque zone de la pluralité de zones.

8. Procédé (300) de contrôle actif d'écoulement d'air dans un aéronef, comprenant :
l'initialisation d'un écoulement d'air vers une pluralité de zones (105) dans un aéronef, dans lequel l'initialisation de l'écoulement d'air comprend l'initialisation d'une pluralité de dispositifs de contrôle d'écoulement (104) en communication fluidique avec chaque zone de la pluralité de zones ;
le fait de déterminer si un changement d'écoulement d'air est nécessaire dans au moins une zone de la pluralité de zones ;
la détermination de besoins d'écoulement d'air pour chaque zone de la pluralité de zones en réponse à la détermination qu'un changement d'écoulement d'air est nécessaire pour l'au moins une zone ; et
le réglage de la pluralité de dispositifs de contrôle d'écoulement (104) pour égaler ou dépasser les besoins d'écoulement d'air ; et **caractérisé par**
la détermination d'une quantité minimale d'écoulement d'air pour chaque zone associée sur la base d'un nombre d'occupants dans chaque zone associée ; et la détermination d'une répartition des occupants de chaque zone à un moment particulier, et l'évaluation d'un changement de la répartition des occupants pour chaque zone ; et
le fait de diriger chaque dispositif de contrôle d'écoulement de la pluralité de dispositifs de contrôle d'écoulement afin de fournir la quantité minimale d'écoulement d'air à une zone associée de la pluralité de zones sur la base du nombre d'occupants dans chaque zone associée sur la base du changement de la répartition des occupants pour chaque zone par rapport au temps.

9. Procédé selon la revendication 8, dans lequel l'initialisation de l'écoulement d'air comprend en outre l'initialisation d'un système de climatisation (102) pour l'aéronef, le système de climatisation étant configuré pour fournir une dispersion d'écoulement d'air à la pluralité de zones.

10. Procédé selon la revendication 8, dans lequel le réglage de la pluralité de dispositifs de contrôle d'écoulement comprend le fait de diriger chaque dispositif de contrôle d'écoulement de la pluralité de dispositifs de contrôle d'écoulement afin d'augmenter ou diminuer un écoulement d'air vers une zone associée sur la base des besoins d'écoulement d'air.

11. Procédé selon la revendication 8, dans lequel le fait de déterminer si le changement d'écoulement d'air est nécessaire comprend :
le fait de déterminer si un besoin d'écoulement d'air minimum pour l'au moins une zone a été interrompu.

12. Procédé selon la revendication 11, dans lequel le fait de déterminer si un besoin d'écoulement d'air minimum a été interrompu comprend la réception d'informations d'écoulement d'air en provenance d'un appareil de rétroaction d'écoulement d'air de l'au moins une zone.
